# EUROPÄISCHE PATENTANMELDUNG

(11) **EP 0 806 400 A1**
(43) Veröffentlichungstag der Anmeldung: **12.11.1997**
(21) Anmeldenummer: 96107121.4
(22) Anmeldetag: 07.05.1996
(51) Int. Cl.: C02F 3/20, B01F 3/04

(54) **Bogenbelüfter**

(71) Anmelder: Von Nordenskjöld, Reinhart, Dr.-Ing., D-85658 Egmating-Münster (DE)
(72) Erfinder: Von Nordenskjöld, Reinhart, Dr.-Ing., D-85658 Egmating-Münster (DE)

(57) **Zusammenfassung**

Bei der Erfindung handelt es sich um einen bogenförmigen Flächenbegaser, der insbesondere auch als Kläranlagenbelüfter einsetzbar ist zum Eintrag ungestörter feinblasiger Blasenschwärme. Dabei ist eine vollständig gelochte Membran (3) um einen preiswerten flachellyptischen, balkenförmigen Gewichtsflachkörper (4), gehalten von Niederhaltern, aufgezogen.

Diese so gebildeten Einzeleinheiten lassen sich bei minimiertem Gesamtgewicht selbst beschwerend, hängend oder am Boden stehend, in einem Fluidbecken installieren. Sie sind einzeln leicht auswechselbar und das einzelne Element kann nach einigen Jahren einfach um 180° gedreht, mal aus der einen Seite ausgasend und mal aus der anderen Seite ausgasend, eingesetzt werden, so daß ihre Lebensdauer insgesamt den üblichen Begasern oder Belüftern, die mit Membranen ausgerüstet sind, deutlich überlegen sind.

## Beschreibung

### Gegenstand:

Die Erfindung bezieht sich auf einen Membranbegaser mit bogenförmiger Eintragsfläche zum Einbringen von Gasen in Fluide.

### Vorgang und Aufgabenstellung

Beim Einbringen von Gasen in Fluiden ist das Ziel zumeist die Einbringung von Komponenten vom gasförmigen Zustand in das Fluid, wie z.B. beim Begasen von Abwässern in Kläranlagen das Einbringen von Luftsauerstoff in das Abwasser. Bei diesem Vorgang sind vor allem nachfolgende Zusammenhänge zu beachten.
a) Beim Abwasser sowie bei allen anderen Begasungen von Fluiden spielt in der Regel die Wirtschaftlichkeit eine große Rolle, und zwar bezüglich der Investition und der laufenden Kosten. So geht z.B. bei der Abwasserreinigung die Investition mit 60 - 80% in den Abwasserpreis ein, den die Bürger bezahlen, und für eine Kläranlage mit 100000 Einwohnerwerten müssen ständig 250 - 300 kW an Kompressorleistung in Betrieb gehalten werden.
b) Der Vorgang des Stoffaustausches vom Gas in das Fluid geschieht in der Grenzfläche, z.B. von feinen Blasen, und wird in seiner spezifischen Quantität, was in der Regel auch die Effizienz und Wirtschaftlichkeit bestimmt, von der Größe der Grenzfläche der zur Verfügung stehenden Zeit von den Mikroströmungsverhältnissen in den Grenzschichten und dem Sättigungsgrad im Fluid bestimmt.
   Natürlich werden kleine Blasen angestrebt, weil die spezifische Oberfläche einer Gasmenge mit kleiner werdendem Blasendurchmesser steigt und ab ca. 1,5 mm elyptisch überproportional ansteigt. Zu beachten ist, daß der Energieaufwand zur Erzeugung kleiner Blasen nicht dem Effizienzvorteil übersteigt. Darüber hinaus steigen kleinere Blasen (< 1mm ⌀) langsamer im Fluid auf, wodurch die Verweilzeit erhöht wird.
   Wichtig ist, auch die Vorgänge an der Grenzfläche zu beachten, weil bei zu kleinen Blasen durch mangelnde Grenzflächenströmung auf der Fluidseite der Konvektionsanteil des 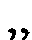 Abtransports der einzutragenden Stoffe in das Fluid 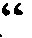 durch verringerten Grenzflächenaustausch immer stärker zurücktritt und der Gastransport von der Grenzfläche weg in das Fluid immer mehr zu der leistungsschwächeren Diffusion hin verschoben wird, so daß der Stoffgehalt direkt in der Grenzfläche des Fluids ansteigt und den eigentlichen Stoffaustausch bremst. Der Einfluß hängt von der Viskosität des Fluids ab und beginnt bei Wasser mit Blasendurchmessern < 1 mm an Bedeutung.
c) Wichtig ist auch, daß der eigentliche Blasenstrom im Fluid so geführt wird, daß nicht Fluidströmungen und -Verwirblungen, welche einerseits durch zu intensives Begasen hervorgerufen werden und andererseits dann auftreten, wenn man nicht eine freie Aufströmung mit dem Gas und Rückströmung des Fluids zuläßt, dazu führen, daß kleine Blasen zu größeren Blasen zusammengeschlagen und verwirbelt werden, und somit die Gesamteffizienz leidet. Dies wird besonders erwähnt, da es in der Praxis als sehr häufiger Fehler beobachtet werden muß
d) Weiterhin ist zu beachten, daß schon im Entstehungsraum der Gasblasen, d.h. dort wo, die Gasblasen austreten, diese nicht ineinander laufen oder schon dort durch örtliche Strömungen am Begasungskörper ineinander getrieben werden, weil sonst von vornherein größere Blasen durch das Fluid streichen als eigentlich ursprünglich erzeugt wurden. Auch dies ist ein in der Praxis häufig zu beobachtender Fehler, es sei hier nur an die vielen stabartigen und rohrartigen Belüfter erinnert, die von der Unterseite her, zumindest aber von der Seitenfläche her Blasen nach oben streichen lassen, die in die darüber bereits entstandenen Blasen hineinlaufen und sich mit diesen zu größeren Blasen vereinen und noch zudem durch die ungünstige Strömung, wie sie um einen runden rohrartigen waagerecht in einem Fluid angeordneten Körper entstehen, oberhalb dieses Körpers zusammengedrängt werden.
e) Wichtig ist weiterhin, daß der technische Aufwand zum Halten von Begasungskörper sowie zur Luftzufuhr minimiert wird, damit nicht deren Investion die Investition für das eigentliche Teil, was die feinen Blasen im Fluid erzeugt, bei weitem übersteigt. Ohnehin sind schon die Investitionen für die Drucklufterzeugung hoch genug.
f) Neben der Aufgabe, den beschriebenen physikalischen Vorgängen optimal gerecht zu werden, sei nochmals auf die Notwendigkeit niedriger Investitionen aber auch auf Anforderungen aus der Praxis nach einfach zu installierenden, im Betrieb leicht zu wartenden und zu reparierenden und einfacher, robuster Einrichtungen, die z.B. auch dem rauhen Betrieb in einer Kläranlage genügen, hingewiesen.
g) Aus dem Betrieb von Kläranlagen ergibt sich auch eine extreme Anforderung an die Sicherheit und Zuverlässigkeit gegen Versagen der Einrichtungen, denn wenn z.B. in einer Kläranlage die Belüfter ausfallen und nicht schnellstens ersetzt oder reaktiviert werden können, tritt Sauerstoffmangel ein, die Bakterien sterben und es kann Wochen dauern, bis diese wieder heranwachsen, so daß in der Zwischenzeit das schützende Gewässer und sein Ökosystem mangels genügender Reinigung der Abwässer schon zerstört worden ist. Es dauert ein oder mehrere Jahre bis ein solches Ökosystem sich wieder erholen kann.

Natürlich spielen noch andere Gesichtspunkte eine Rolle, doch leitet sich ein Fortschritt und eine Erfinderhöhe auf diesem Gebiet im wesentlichen von den unter bis g) aufgeführten Gesichtspunkten ab.

### Stand der Technik:

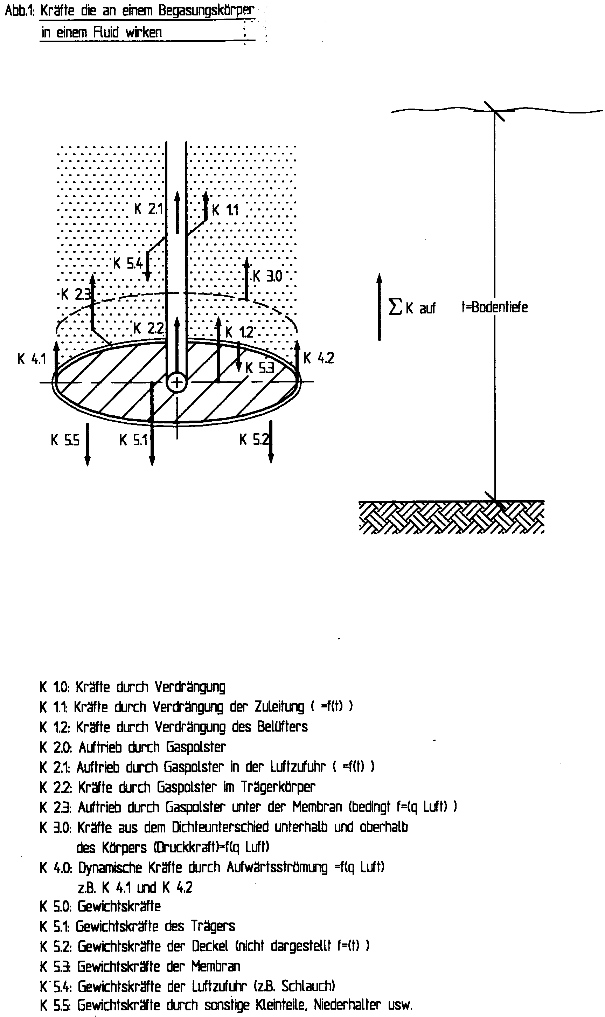

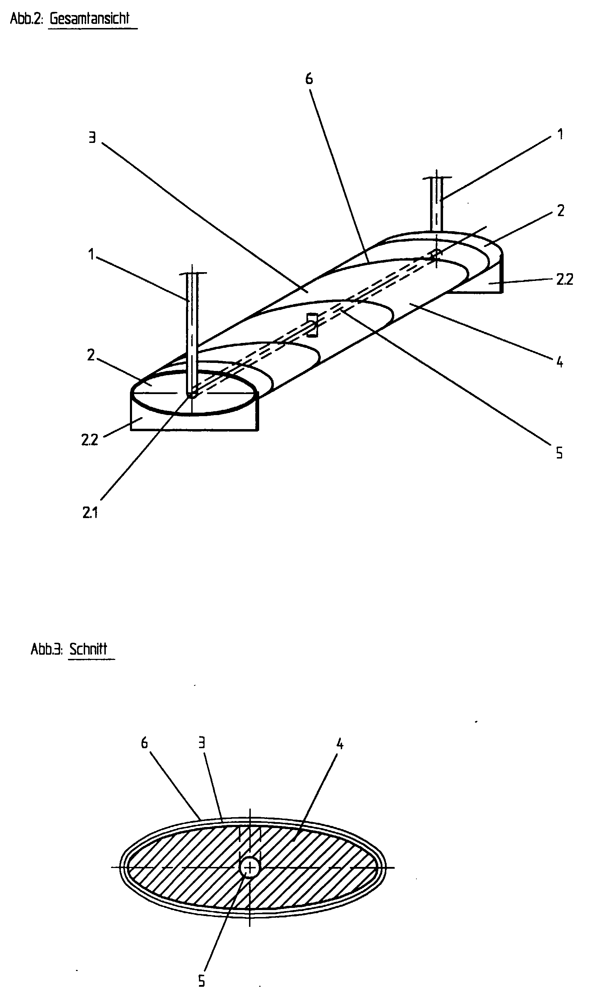

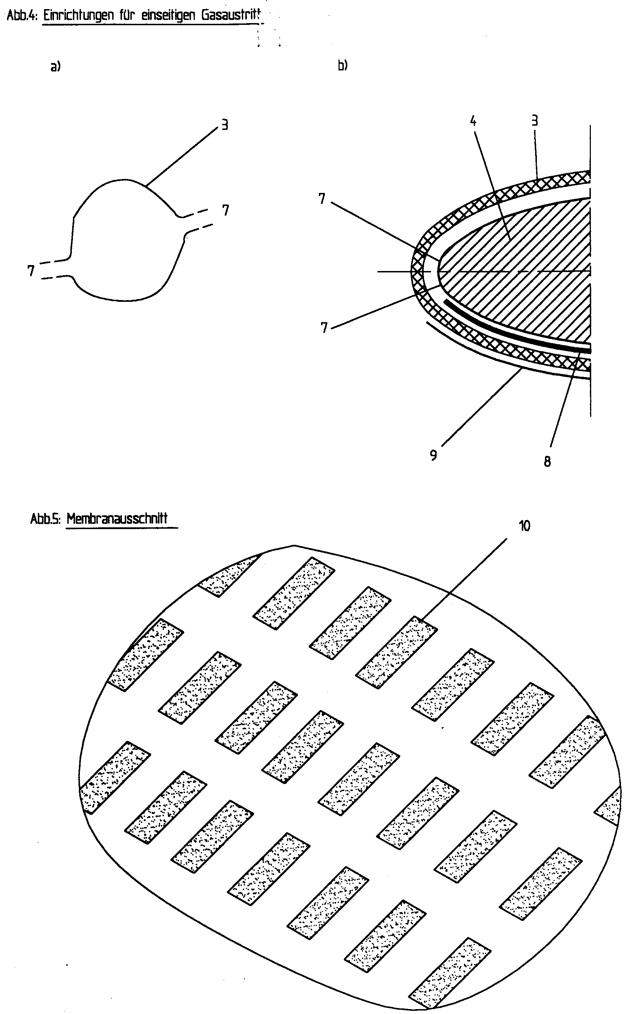

Es sind eine Vielzahl von Einrichtungen zur Erzeugung kleiner Gasblasen in Fluiden bekannt, wobei in der Abwassertechnik derzeit die Gruppe der festen Körper mit feinen mehr oder weniger runden ca. 60 µ großen Löchern und die Gruppe der mit in der Regel geschlitzten Membranen bespannten Trägerkörper das Feld beherrschen. Obwohl die Lebensdauer der letzteren den ersteren deutlich unterlagen ist, haben sie sich mehr und mehr verbreitet, weil sie verstopfungsarm sind und nicht unter Verstopfungen leiden, die bei festen Körpern zu Druckanstieg mit Energieverbrauch sowie zu größeren Blasendurchmessern mit Effizienzverlust im Eintrag führen. Es gibt eine solche Fülle von Begasungskörpern verschiedenster Ausführung, daß diese hier nicht einzeln aufgeführt werden können, auf einige Ausführungen, die in der Praxis geläufig sind bzw. als Patent angemeldet wurden, , sei eingegangen:
1. Es gibt Plattenbelüfter, die über die ganze Fläche des Bodens eines Kläranlagenbelebtschlammbeckens installiert werden (z.B. System Mesner). Abgesehen davon, daß solche Einrichtungen sehr teuer sind, führt ein solches System zu problematischen Rückströmungen und Verwirbelungen, so daß nur bei kleineren Beaufschlagungen gute wirtschaftliche Eintragswerte erzielt werden. Kleine Beaufschlagungsraten bedeuten aber noch eine weitere Steigerung der Investition, da mehr Plattenbelüfter erforderlich sind. Auch ist die Befestigung am Boden aufwendig und muß extremen Anforderungen genügen, denn die Plattenbelüfter blähen sich auf und weisen hohe Auftriebskräfte auf. Löst sich jedoch ein Plattenbelüfter oder tritt ein sonstiger Defekt am Aggregat auf, oder ist ein Wechsel der Membran erforderlich, so muß das gesamte Becken abgestellt und entleert werden, d.h. im Grunde müßte man als Sicherheit die doppelte Beckenkapazität vorhalten. Weiterhin neigt eine große ebene Fläche bei Zeiten geringer Abwasserbelastung (geringe Belüftung und geringe Strömungen) zu Ablagerungen. Belebtschlamm und andere Komponenten, wie z.B. feiner Sand, lagern sich ab und können das Belüftungssystem zum Großteil verstopfen.
2. Häufig werden Luftverteilrohre, bestückt mit runden Membranbelüftern, eingesetzt. Diese Form weist viele der beschriebenen Nachteile auf. Die um einen runden Körper laufende, oben wieder zusammentretende, Wasserströmung - und eine solche wird durch aufsteigende Blasen immer indiziert - treibt Kleine Blasen zu großen zusammen. Der Aufwand, die Luft den Einzelbelüfterelementen zuzuführen, ist groß und teuer. Die zu bewältigenden Auftriebskräfte sind groß. Weiterhin muß bei Defekt an *einem* Belüfter der ganze Strang entnommen werden, um die Reparatur durchzuführen, so daß eine deutliche Schwächung der Gesamtbelüftung eintritt und somit eigentlich Zusatzkapazitäten installiert werden müßten.
3. Eine weitere Ausführung eines Belüfters geht aus der Auslegungsschrift 2513547, angemeldet 1975, hervor. Diese Einrichtung setzte sich am Markt nicht durch, was sicher auch mit den nachfolgend aufgeführten Nachteilen zu tun hat. Als erstes wird eine Luftverteilbehälter installiert, der gleichzeitig Trägerkörper ist, aber einen unnötig großen Auftrieb schafft, so daß starke Halterungen oder Gegengewichte installiert werden müssen, um den Körper zu halten; alles Investitionen, die mit dem eigentlichen Begasungsvorgang nichts zu tun haben. Desweiteren wird an der Oberfläche seitlich ein horizontaler Teil angestrebt, der natürlich zu Ablagerung und Verstopfungen führen muß. Außerdem ist die Einrichtung kompliziert und aufwendig, denn neben dem stirnseitigen Deckel sind noch Schellenbänder vorgesehen, die sicher in den Bereichen der horizontalen Seitenstreifen keine Dichtung der Membranen nach außen hin bewirken. Auch ist nicht bedacht, daß Temperaturschwankungen den starren Mittelanker bei wärmerer Temperatur längen und somit die Deckel nicht mehr dichten werden, es sei denn, man würde den inneren Anker vorspannen, was jedoch konstruktiv nicht tragbar wäre. Nachteilig ist sicher auch die Art der Membran, die aus einem Kunststoffgewebe bestehen soll, welches auf der Innternseite mit elastischem Kunststoff beschichtet ist; wie ein solcher starrer Körper aufgezogen, nach den bekannten Schwindungserscheinungen ausgewechselt und mit feinblasigem Luftaustrag erreicht werden soll, ist schwer zu erkennen.
4. Ein weiteres Beispiel sei mit der europäischen Patentanmeldung mit der Veröffentlichungs-Nr. 0385965 aus 1990 behandelt. Die hier beschriebene Einrichtung bezieht sich auf einen plattenartigen, mit einer Luftverteilerfolie umspannten, Formkörper, wobei auf derUnterseite und seitlich dichtende Formteile angeschraubt werden. Die Beschreibung und Darstellung bezüglich des Teils 15 und der Zuordnung von Lufteintrittsstutzen 5 schwierig zu verstehen. Die Einrichtung ist aufwendig und teuer, und sie besteht aus sehr vielen Teilen. Sie weist durch ihre hohle Form in Abb. 1 bis 3 unnötige Auftriebskräfte auf. Die ebene Oberfläche der Membran wird sich im Betrieb zu einem größeren, den Auftrieb noch verstärkenden Polster aufblähern. Im Schwachlastbetrieb führt die ebene Fläche zu Verstopfungen. Auch macht der Erfinder in Spalte 3 in Zeile 7 und 8 Bemerkungen über Gewicht und Auftrieb, doch sind die Angaben nicht detailliert und der Erfinder bedenkt nicht, daß er gerade, weil seine Membranen keine Niederhalter haben und sich somit ballonartig aufblähen werden, große Übergewichte installiert werden müssen. Das Auswechseln der Membran aufgrund mehrerer Leisten, die abgeschraubt werden müssen, und der zwei Spannbänder, die zu entfernen sind, ist aufwendig. Der Belüfter ist wohl auch dafür gedacht, direkt über dem Beckenboden installiert zu werden. Bei solchen Belüftern hat sich jedoch gezeigt, daß die Zuströmung des vom Blasenstrom nach oben getragenen Wassers nur seitlich auf den Belüfter zutritt und so von vornherein oberhalb zu starken Einschnürungen und zu Effizienzverlust des Sauerstoffeintrages führt. Die Luftzufuhr erfolgt bei Fig. 3 und 4 über ein in die Membran eingesetztes Ventil; wie die Praxis zeigte, ein hochanfälliger Bereich.
5. Üblich sind auch ganze Gitter mit zylindrischen Rundbelüftern, auf deren Effizienz schon eingegangen wurde. Hier liegt jedoch auch der Nachteil vor, daß wenn an *einem* der Belüfterelemente ein Schaden auftritt, aufwendigerweise unter Minderung eines wesentlichen Belüftungsanteils das ganze Gitter herausgenommen werden muß, oder bei Festinstallation sogar das ganze Belebtschlammbecken entleert werden muß.
6. Eine Weitere Einrichtung zeigt Offenlegungsschrift DE 4211648 A1, eine neuere Anmeldung von 1992. Es handelt sich um einen einseitig an ein Luftverteilsystem angeschraubten Trägerkörper mit an den Enden kreisförmigem und im Mittelbereich flachem oder ovalem seitlich abgerundetem Querschnitt, um den eine nach oben hin perforierte Membran gespannt ist, wobei Bänder auf dem kreisförmigen Teil die Membran abdichten.
   Diese Anmeldung weist zwar in Spalte 2, Zeile 6, auf die Erfordernis eines geringen Auftriebes hin, zeigt allerdings dann in Figur 7 wieder reichlich Auftrieb aus der sich frei aufblähenden Membran. Dieser Auftrieb wird die Befestigung am Luftverteilsystem aufgrund seiner starken Hebelwirkung stark belasten. Ein an sich einfacher Belüftungskörper wird an dieser Stelle wieder kompliziert. Der Anmelder geht in Spalte 2, Zeile 47 bis 50, zwar auf diesen Problemkreis ein, hat jedoch wohl nicht erkannt, daß es am wirtschaftlichsten ist, den ganzen Körper so zu gestalten, daß er im Gewichtsausgleich ist und damit überhaupt kein Moment auf die Halterungen wirkt. In Spalte 3, Zeile 27, wird allerdings von Auftrieb gesprochen, so daß möglicherweise in Spalte 2 gar kein Gewicht gemeint ist. Der in Spalte 3, Zeile 27 und 28, erwähnte schnelle und einfache Membranwechsel dürfte in der Praxis nicht vorliegen, denn erfahrungsgemäß schrumpfen die Membranen - und die hier aufgezeigte Membrane liegt übersall satt an, so daß auch wegen der Reibung zwischen dem Träger und der Membran ein Überziehen über wechselnde Querschnitte äußerst schwierig ist. Die Einrichtung kann bei Defekten oder zum Membranwechsel nicht allein entnommen werden.

Zusammenfassend zeigt der Stand der Technik sehr gute Einzellösungen, und in der Praxis hat sich auch etliches gut bewährt, doch ist nicht die Lösung zu erkennen, die in optimaler Weise die unter der Aufgabenstellung geschilderten Anforderungen in sich vereint.

### Die vorgeschlagene Erfindung:

Die vorgelegte Erfindung löst die eingangs geschilderten Aufgaben weitgehend durch den folgenden Lösungsvorschlag, der sich bei länger dauerndem Probebetrieb im Versuchsfeld und in der Praxis hervorragend bewährt hat. Der Belüfter - dieser Ausdruck wird im Nachfolgenden stellvertretend für alle Begasungsaufgaben benutzt - der im einzelnen durch die Detailbeschreibung erläutert wird, hat folgende Eigenschaften:
a) Die Membran ist rundherum gelocht, und der gesamte Belüfter ist um 180° drehbar, so daß nach Ermüden oder sonstigem Ausfall der oberseitigen Membran die Unterseite einfachst zum Einsatz gebracht werden kann.
b) Der Träger der Membran vereinigt in sich den Eigenschaften, Träger zu sein, Gewicht bzw. 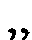 Halterung 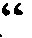 zu sein, Luftführung zu sein und Aufnehmer der seitlichen Abschlußkappen.
   Der vorgeschlagene Belüfter hat nur wenige Teile, er ist äußerst einfach aufgebaut und kostengünstig. Der Kostenvorteil wird noch dadurch verstärkt, daß der Grundkörper aus einfachem preiswerten Steinmaterial, z.B. Beton, hergestellt wird; (1 kg Beton ≈ 0,5 DM, 1 kg Eisen oder Stahl ≈ 1,5 DM).
c) Der Grundkörper ist im Verbund mit der Membran und den Deckeln sowie den Luftzufuhrelementen so dimensioniert, daß er im vollen Betrieb nur ein solches Übergewicht hat, daß er selbständig am Boden stehen kann oder an einem Schwimmer hängend in Bodennähe verbleibend eingesetzt werden kann.
   Die einzelnen an einem Belüfter wirkenden Kräfte sind in Abb. 1 dargestellt; sie können z.T. physikalisch berechnet werden, müssen aber z.T. im Versuch (Strömungsanteil) ermittelt werden. Das richtige Gewicht wird durch eine Iterationsrechnung für verschiedene Trägergrößen und verschiedene Beaufschlagung ermittelt.
   Bei einem Beispiel zur Abwasserbelüftung ergaben sich Abmessungen von Länge zu Breite zu Höhe von 1500 x 240 x 60, wobei Länge zu Breite entscheidend sind.
d) Eine Ausführung des Belüfters bietet als Einzelelement mit den Abmessungen 1,50 x 0,3 m bezüglich der Belüftung die optimale Oberfläche, denn er ist weder ganzflächig am Beckenboden verteilt noch trägt er punkt- oder linienförmig ein.. Er berücksichtigt die Erfordernisse der Gesamtströmungsverhältnisse im Becken und läßt einen Flächenschwarm von 0,7 bis 2 mm großen Blasen mit optimaler Blasengröße ungestört nach oben steigen; dies Optimum bezieht sich auf ihre bewegte Grenzfläche und die hohe spezifische Oberfläche. Das ganze wird auch ermöglicht, weil es sich um einen unabhängigen, mit eigener flexibler Luftzufuhr versehenen, Belüfter handelt, der also im obigen Sinne optimal installiert werden kann.
e) Das unter d) geschilderte Beispiel ist beim Einsatz im Abwasserbereich mit einem Gesamtgewicht von ca. 28 kg noch gut handhabbar.
f) Der Belüfter vermeidet durch entsprechendes Niederhälten der Membran ein unnötiges Aufblähen, er minimiert somit das erforderliche Gewicht und ist durch vollen Kraftausgleich mit leichtem Übergewicht zur selbständigen Positionierung geeignet.
g) Die Einzelelemente sind auch durch ihre flexible Luftzufuhr im vollen Betrieb einzeln auswechselbar bzw. manipulierbar, wobei keine wesentliche Reduzierung der Gesamtluftmenge eintritt. Er kann auch im vollen Betrieb des Systems nachgerüstet und ergänzt werden.
h) Er kann auch einzeln gewartet werden.
i) In einer besonders günstigen Ausführung weist die Membran "Zonenperforierung" auf, so daß man sich dem Einzefall der Begasung, z.B. der Belüftung von Kläranlagen, mit der Blasendichte, die bei Kläranlagen im wesentlichen von der Raumbelastung abhängt, anpassen kann.
j) Die Membran wirkt im Zusammenspiel mit den Luftaustrittsöffnungen des Trägers als Rückschlagklappe, so daß beim Abschalten des Belüfters kein Gas oder Luft ggfs. in Kombination mit Verunreinigungen in den Belüfter eindringen kann.
k) Die unter den Seitendeckeln wirkende pressende Abdichtung wird durch Aufblähen der Membran und Andrücken derselben an die Deckelkanten, günstig "selbstabdichtend" verstärkt.
l) Obwohl die Gasblasen aufgrund des Höhenunterschiedes zwischen Ober- und Unterseite der Membran im wesentlichen nur auf der Oberseite austreten, wird der reine Austritt nach oben alternativ durch innenliegende Dichtlippen, die an der Membran angebracht sind, welche innen auf der gesamten Außenkante des Trägers wirken, oder durch eine aufgeklebte Membran, die am Tage X entfernt wird, oder durch eine eingeschobene "Dichtplatte", die man wechseln kann, unterstützt bzw. hergestellt.
   Die Luftführung im Träger ist in Kombination mit der Luftzuführ über die Endkappen in der Regel so geführt, daß nur die Oberseite des Belüfters mit Luft versorgt wird.
m) Im besonderen Fall, wenn keine Beeinflussung der Membran und hinreichend lange Lebensdauer zu erwarten ist, kann die Membran auch nur mit einseitiger Perforierung ausgeführt werden, und es bedarf keiner Drehung des Elementes.
n) Der Belüfter kann an seiner flexiblen Luftzufuhr oder an eigens dafür angebrachten Seilen nach Erfordernis beliebig aufgezogen werden.

### Detailbeschreibung:

Die Erfindung wird anhand der folgenden Skizzen und ihrer Detailkennzeichnung wie folgt beschrieben:
Abb. 1 zeigt sämtliche Kräfte, die an einem in Betrieb befindlichen Begasungskörper in einem Fluid wirken.
Abb.2 zeigt in einer Gesamtansicht den Belüfter mit 1 Luftzufuhr, 2 Enddeckel, 2.1 Zuführtüllen, 2.2 Füße, 3 Membran, 4 Trägerkörper, 5 Gasführung, 6 Niederhalter
Abb. 3 zeigt einen Schnitt durch den Gesamtkörper mit z.T. gleicher Numerierung.
Abb. 4 zeigt diverse Einrichtungen zur Sicherung des oben einseitigen Gasaustritts mit
   a) einer mit Lippen extrudierten Membran, die später von außen gelocht wird und dann umgedreht wird, und
   b) Schnitt durch den Körper mit Detaileinrichtungen. Es sind 7 die Lippen, 8 eine eingelegte Dichtplatte, 9 eine abziehbare Folie.

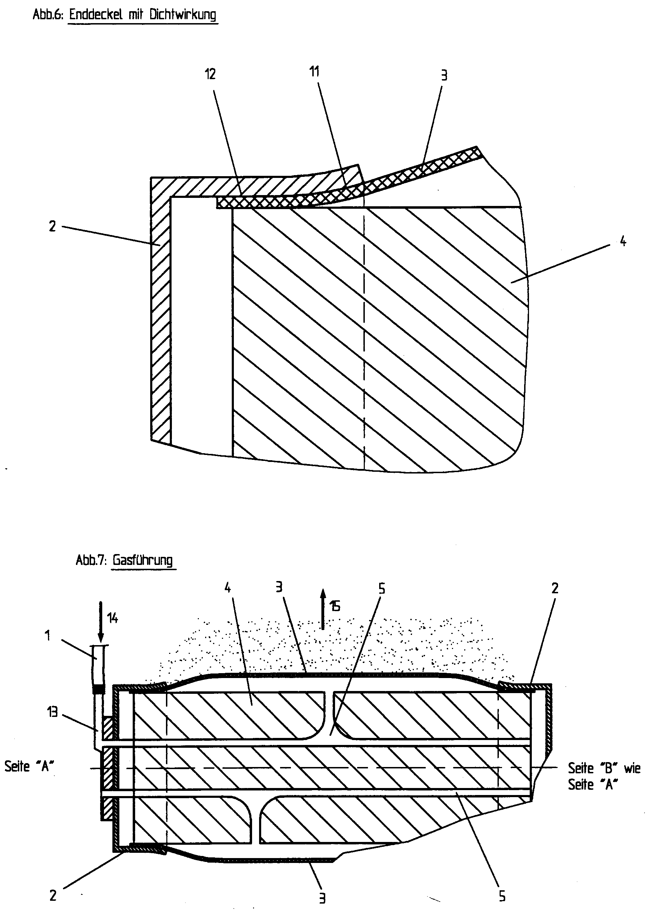

Abb. 5 zeigt einen Membranausschnitt mit variierter Perforierung 10.
Abb. 6 zeigt den Enddeckel und Formen der Dichtwirkung mit 11 Dichtung durch Aufblähen und 12 Dichtung durch Klemmwirkung
Abb. 7 veranschaulicht ein Beispiel der geregelten Gasführung mit spiegelbildlich gleichen Seiten "A" und "B, wobei 13 eine aufsteckbare Gaszufuhrtülle ist, die bei 180° Drehung des Trägers mal den einen und mal den anderen Gaskanal mit Gas beschickt, wobei das Gas bei 14 zuströmt und oben unter die Membran gelangt und an der Oberfläche nach oben von 3 abströmt in Richtung 15.

## Patentansprüche

**1.** Begasungsvorrichtung zur feinblasigen Eintragung von Gasen in Flüssigkeiten, insbesondere von Druckluft in Abwässer mit einem länglichen Grundkörper mit elyptoidem Querschnitt, einer diesen sich um seine Mantelfläche umspannende perforierte Membran, mindestens einem Enddeckel, mit Luftzufuhr, Rohrtüllen, Niederhaltern und einer flexiblen Luftzufuhr dadurch gekennzeichnet, daß die gesamte Einheit mühelos um 180° drehbar, damit nach Bedarf mal die eine Seite als Oberseite feinblasig einträgt und mal die andere Seite als Oberseite einträgt, daß der Trägerkörper aus preiswertem steinartigen Material, z.B. Beton, hergestellt ist, daß die gesamte Einheit unter Beachtung aller Kräfte so abgestimmt ist, daß bei vollem Betrieb eine Restkraft von ca. 10% bis 12% seines Gesamtgewichts verbleibt, die das Element in seiner bodennahen Lage stabil hält und daß der Träger nach dem Prinzip alles in einem Träger, Gewicht, Luftführung und Basis für die Abdichtung ist.

**2.** nach Anspruch 1 d.g.d., mindestens ein Enddeckel so aufgesetzt ist, daß er doppelwirkend die Stirnseite bzw. die Membran auf den Trägerenden abdichtet.

**3.** nach Anspruch 1 u. 2 d.g.d., daß mindestens eine schnellverschlußartige Tülle auf dem Deckel fixierend so bzgl. der Luftzufuhr aufgesteckt wird, daß in Kombination mit der Luftführung im Träger immer nur die Oberseite mit Luft versorgt wird.

**4.** nach Anspruch 1 dadurch gekennzeichnet, daß die Membran mit Niederhalter weitgehend niedergehalten wird.

**5.** nach Anspruch 1. d.g.d. die Membran Dichtlippen aufweist, die im aufgezogenen Zustand längsseit Ober- und Unterseite abdichtend trennen.

**6.** nach Anspruch 1 d.g.d. g, daß eine abdichtende Platte unterseitig zwischen Träger und Membran herausnehmbar eingeschoben ist.

**7.** nach Anspruch 1, daß unterseitig auf der perforierten Membran eine abziehbare dichtende Folie angebracht ist.

**8.** nach Anspruch 1 d.g.d., daß die Membran felderartig perforiert ist.

**9.** nach Anspruch 1. d.g.d., daß der Begasungskörper mit anderen Begasungskörpern in Längs- oder Querrichtung zu Gesamteinheiten zusammengesetzt wird und diese Einheiten eine gemeinsame flexible Luftzufuhr aufweisen.

**10.** nach Anspruch 1. d.g.d. die Membran einseitig hutartig dicht ist und wie ein Strumpf auf den Träger gezogen wird.

**11.** nach Anspruch 1. d.g.d. nur an einer Seite eine Luftzufuhr erfolgt.

**12.** nach Anspruch 1 u. 11. d.g.d. an der anderen Seite ein Haltseil angebracht ist.

**13.** nach Anspruch 1.d.g.d. zwei Enddeckel vorgesehen sind die an ihrer Unterseite fußartige Verlängerungen aufweisen.

**14.** nach Anspruch 1. d.g.d. die Membran mit ca. 16 Schlitzen je cm² dicht besetzt ist.

**15.** nach Anspruch 1. d.g.d. die Membran perforierte Felder aufweist.

**16.** nach Anspruch 1 dadurch gekennzeichnet, daß die Membran nur einseitig perforiert ist.

**17.** nach Anspruch 1.d.g.d. mindestens ein Membranende durch Schellen abgedichtet ist.

**18.** nach Anspruch 1. d.g.d. und 2. d.g.d. mindestens eine Tülle direkt auf den Träger gesteckt wird.

**19.** nach Anspruch 1. d.g.d. die Gasfürung im Träger durch eine jeweils nach unten auf einem entsprechenden Dichtsitz liegende Kugel bezüglich des nach oben zu lenkenden Stromes automatisch geregelt wird.

**20.** nach Anspruch 1. d.g.d. dem Grundkörper bei seiner Herstellung bei Beibehaltung einer Standardgrundform zur Anpassung an den jeweiligen Einsatzfall leichteres oder schwereres Material beigemengt wird.

**21.** nach Anspruch 1. d.g.d. die Membranschlitze in Umfangsrichtung ausgerichtet sind.

**22.** nach Anspruch 1. d.g.d. die Gaszufuhr bzw. der Gaseintrag pulsierend erfolgt.

**23.** nach Anspruch 3. d.g.d. das Tüllenteil mit einem Schnellverschluß auf den Deckel fixiert ist.

**24.** nach Anspruch 2. d.g.d. das Tüllenteil in eine Paßsitzhaftung dichtend so in das Deckelteil aufgesetzt wird, daß das Restgewicht der Gesamteinheit die Teile ausreichend zusammenhält.

**25.** nach Anspruch 1. d.g.d. mindestens ein Deckel so geformt ist, daß er zum Wechsel der Membran von seinem klemmenden Sitz abgezogen wird, um nach Membranwechsel wieder haltend und dichtend aufgepaßt zu werden.

**26.** nach Anspruch 1., Anspruch 24. und Anspruch 25. d.g.d. Tülle und Deckel ein Teil sind.

**28.** nach Anspruch 1.d.g.d. der Grundkörper an den Enden über den ganzen Umfang oder sektionsweise Vertiefungen aufweist in die entsprechenden Innenwülste des oder der Deckel passen.

**29.** nach Anspruch 1. u. 28. d.g.d. die Innenwülste der Deckel im Bereich federnder durch Einschnitte zu Einzelenden des oder der Deckelenden getrennten Zungen sitzen.

**30.** nach Anspruch 1. d.g.d. das Element unter einem Schwimmer frei an der flexiblen Luftzufuhr bzw. Halterung hängt, wobei die Schwimmer mittels ihrer Gesamtgaszfuhr zu frei beweglichen Ketten zusammageschlossen sein können.
